(19) Europäisches Patentamt
European Patent Office
Office européen des brevets

(11) **EP 1 941 475 B1**

(12) **FASCICULE DE BREVET EUROPEEN**

(45) Date de publication et mention de la délivrance du brevet:
**11.03.2009 Bulletin 2009/11**

(21) Numéro de dépôt: **06830977.2**

(22) Date de dépôt: **20.10.2006**

(51) Int Cl.:
*G08B 13/14* (2006.01)    *G01P 13/00* (2006.01)
*G01P 15/08* (2006.01)    *G01P 15/18* (2006.01)

(86) Numéro de dépôt international:
**PCT/FR2006/002359**

(87) Numéro de publication internationale:
**WO 2007/048908 (03.05.2007 Gazette 2007/18)**

(54) **PROCEDE DE TRAITEMENT DES MESURES D'ACCELERATION, CAPTEUR ACCELEROMETRIQUE ET SYSTEME D'ALARME EQUIPE DE TELS CAPTEURS**

VERFAHREN ZUR VERARBEITUNG VON BESCHLEUNIGUNGSMESSUNGEN, BESCHLEUNIGUNGSAUFNEHMER UND MIT DERARTIGEN AUFNEHMERN AUSGESTATTETES ALARMSYSTEM

METHOD FOR PROCESSING ACCELERATION MEASUREMENTS, ACCELERATION SENSOR AND ALARM SYSTEM EQUIPPED WITH SUCH SENSORS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.10.2005 FR 0510869**

(43) Date de publication de la demande:
**09.07.2008 Bulletin 2008/28**

(73) Titulaire: **Tag Technologies**
**31670 Labege (FR)**

(72) Inventeurs:
• **PRUNET, Jean**
  **31450 Baziège (FR)**
• **FOURNIOLS, Jean-Yves**
  **F-31200 Toulouse (FR)**

(74) Mandataire: **Cabinet BARRE LAFORGUE & associés**
  **95, rue des Amidonniers**
  **31000 Toulouse (FR)**

(56) Documents cités:
**WO-A-01/37236**        **US-B1- 6 288 395**

## Description

L'invention concerne un procédé de traitement des mesures d'accélération délivrées par un accéléromètre, un capteur accélérométrique de détection de mouvement mettant en oeuvre un tel procédé et un système d'alarme équipé de tels capteurs accélérométriques. Un capteur accélérométrique selon l'invention est particulièrement mais non exclusivement destiné à être intégré dans un système d'alarme de protection d'objets meubles (oeuvres picturales ou sculpturales, meubles meublants de valeur, dossiers, systèmes informatiques, appareils électroménagers, objets non renfermés dans une enceinte close tels que les meubles de jardin, coffres-forts portatifs,...) apte à élaborer un signal de déclenchement d'alarme réactif à tout déplacement sans autorisation de ces derniers.

Il est connu (WO 01/37236), d'équiper des objets dont la protection est recherchée par des capteurs, dits capteurs accélérométriques, dotés d'accéléromètres adaptés pour fournir un signal représentatif de l'accélération de l'objet sur lequel ils sont fixés. Il est également connu d'associer aux accéléromètres, des moyens pour déterminer la fréquence du signal d'accélération et émettre un signal de déclenchement d'alarme si la fréquence du signal est représentative d'un mouvement résultant d'une tentative de vol de l'objet. La fréquence d'un mouvement normal d'un humain est comprise entre 0.5Hz et 2Hz et peut atteindre au maximum 50 Hz. De ce fait, le signal de déclenchement d'alarme est transmis à une unité centrale reliée au capteur uniquement si une fréquence du signal appartient à cet intervalle de fréquences, dites fréquences humaines.

Le document US 6288395 B1 enseigne, pour les raisons d'amélioration de la fiabilité et d'optimisation de la gestion d'énergie pendant la détection de mouvement d'un objet, une méthode de déclenchement d'alarme étant basée sur l'application d'un mode secondaire de fonctionnement possédant des intervalles d'échantillonnage plus courts.

Selon une première solution connue, les moyens pour déterminer la fréquence du signal d'accélération sont remplacés par des moyens adaptés pour calculer la déviation de l'amplitude du signal d'accélération par rapport à une valeur seuil. Un signal de déclenchement d'alarme est transmis à l'unité centrale si l'amplitude de l'accélération dépasse cette valeur seuil.

Selon une seconde solution connue, les moyens pour déterminer les fréquences du signal d'accélération comprennent des moyens pour effectuer une analyse spectrale du signal d'accélération, notamment par transformée de Fourier rapide. Le signal de déclenchement d'alarme est alors émis lorsque la fréquence du signal appartient à l'intervalle sus-cité des fréquences humaines.

Ces solutions connues présentent plusieurs inconvénients.

La première solution est susceptible de déclencher des faux signaux d'alarme étant donné qu'une forte valeur d'amplitude du signal d'accélération peut provenir d'un phénomène vibratoire naturel, comme une porte qui claque, un plancher qui vibre, etc. La première solution est également susceptible de ne pas détecter les mouvements lents, ces derniers pouvant présenter des amplitudes faibles en dessous de la valeur seuil.

La seconde solution requiert une importante capacité de calcul, ce qui implique l'utilisation de microprocesseurs élaborés. Cette importante nécessité de calcul induit aussi une importante consommation d'énergie pour le calcul du spectre du signal. Typiquement, un tel capteur alimenté en énergie électrique par piles électriques, imposerait un remplacement trop fréquent de ces dernières pour assurer une protection continue, la durée de vie des piles étant au mieux de quelques mois, compte tenu du volume relativement faible requis pour un tel capteur qui doit être discret et doit pouvoir être associé à divers objets, y compris de petites tailles. Pour cette raison, cette solution n'est pas exploitée en pratique.

Par ailleurs, la sensibilité d'un accéléromètre varie dans le temps et dépend de l'environnement dans lequel il est installé. En particulier, un capteur accélérométrique connu fournit une réponse qui dépend de la température, de la pression, de l'humidité, et d'autres grandeurs physiques et ne peut pas s'adapter aux conditions environnementales. Un tel capteur est donc peu fiable pour une utilisation dans un système d'alarme.

L'invention vise donc à proposer un capteur accélérométrique de détection de mouvement et un procédé mis en oeuvre dans un tel capteur, adaptés pour élaborer un signal de déclenchement d'alarme en réaction à tout déplacement de l'objet sur lequel il est appliqué, tout en optimisant la gestion d'énergie.

L'invention vise en particulier à proposer un capteur accélérométrique ayant une consommation électrique suffisamment faible pour lui permettre de présenter une durée de vie supérieure à 6 mois, notamment de l'ordre de une ou plusieurs années, alors qu'il est alimenté par des piles électriques de volume inférieur à $250\,cm^3$, typiquement de l'ordre de $10\,cm^3$. Un tel capteur peut ainsi être associé à des objets de petites tailles tout en assurant une protection durable.

L'invention vise aussi à proposer un capteur apte à détecter des mouvements unidirectionnels, ainsi que des mouvements lents, notamment dans le domaine des fréquences humaines.

L'invention vise aussi à proposer un capteur de détection de mouvement particulièrement adapté à la protection des objets mobiliers.

L'invention vise aussi à proposer un capteur de détection de mouvement qui puisse être conçu de façon à pouvoir s'adapter de manière autonome aux variations des conditions environnementales en fournissant une réponse constante en termes de sensibilité et de fiabilité.

L'invention vise également à proposer un procédé de traitement des mesures d'accélération délivrées par un accéléromètre permettant d'optimiser les ressources et les besoins calculatoires de manière à économiser l'énergie.

L'invention vise également à proposer un procédé de traitement des mesures fournies par un accéléromètre qui améliore la fiabilité vis-à-vis des fausses détections de mouvement.

L'invention vise également à proposer un procédé de traitement plus particulièrement adapté pour détecter des mouvements lents, notamment dans le domaine des fréquences humaines.

Pour ce faire, l'invention concerne un procédé de traitement des mesures d'accélération instantanées délivrées par un accéléromètre selon au moins une direction en vue d'une détection d'une condition de déclenchement d'un signal d'alarme comprenant les étapes dans lesquelles :

- dans un premier mode de fonctionnement, dit mode de pré-alarme, des mesures d'accélération $\gamma_k$ sont réalisées successivement à des intervalles de temps Tk prédéterminés,
- à chaque instant, au moins une valeur, dite valeur d'état, est calculée selon une fonction d'au moins une partie des mesures d'accélérations $\gamma_k$,
- chaque valeur d'état est comparée à une valeur seuil,

caractérisé en ce que si ladite valeur d'état est supérieure à ladite valeur seuil, un deuxième mode de fonctionnement, dit mode d'alarme, distinct du premier mode de fonctionnement, est activé, dans lequel des mesures d'accélération $\gamma_k$ sont réalisées successivement à des intervalles de temps T'k prédéterminés, la valeur moyenne des intervalles de temps T'k prédéterminés, la valeur moyenne des intervalles de temps T'k étant inférieure à la valeur moyenne des intervalles de temps Tk.

Un procédé selon l'invention permet de limiter les besoins en ressources calculatoires et énergétiques en prévoyant un premier mode de fonctionnement dans lequel une valeur d'état est évaluée et comparée à une valeur seuil, ce qui, selon le résultat de cette comparaison, conduit soit à une mise en veille de durée Tk de l'accéléromètre, soit à une analyse approfondie des mesures d'accélération. L'analyse approfondie des mesures d'accélération n'est effectuée que si un premier test est vérifié. Ce test permet de manière simple et efficace de rejeter la plupart des situations qui sont clairement des situations de non alarme, c'est-à-dire des situations non représentatives d'un déplacement de l'objet sur lequel l'accéléromètre est fixé. Si l'analyse de premier niveau indique une possible situation d'alarme, le procédé selon l'invention entre dans un deuxième mode de fonctionnement. Le deuxième mode de fonctionnement correspond à un mode d'analyse approfondie car l'échantillonnage effectué est plus fin, la valeur moyenne des intervalles de temps T'k étant inférieure à la valeur moyenne des intervalles de temps Tk.

Avantageusement et selon l'invention, dans le mode d'alarme, à chaque instant :

- au moins une valeur, dite valeur de déclenchement, est calculée selon une fonction d'au moins une partie des mesures d'accélération $\gamma'_k$,
- ladite valeur de déclenchement est comparée à au moins une valeur prédéterminée, dite valeur de déplacement non nominal,
- si ladite valeur de déclenchement est supérieure à ladite valeur de déplacement non nominal, une condition de déclenchement d'alarme est vérifiée.

Ce mode d'alarme permet ainsi d'analyser plus précisément que dans le mode de pré-alarme les mesures d'accélérations délivrées par l'accéléromètre par un échantillonnage du signal d'accélération plus fin que l'échantillonnage du premier mode de fonctionnement, ce qui permet de confirmer ou d'infirmer la détection d'un mouvement représentatif d'une condition de déclenchement d'alarme.

Selon l'invention, dans le mode d'alarme, à chaque instant, ladite valeur de déclenchement est calculée selon une fonction impaire d'au moins une partie desdites mesures d'accélération $\gamma'_k$ de manière à rendre négligeables lesdites valeurs de déclenchement résultant d'un phénomène vibratoire.

Une fonction impaire est adaptée pour filtrer les hautes fréquences représentatives d'un phénomène vibratoire. Toute fonction impaire d'au moins une partie des mesures d'accélération $\gamma'_k$ peut être utilisée, notamment une fonction de Hanning, une fonction de Blackman, etc.

Avantageusement et selon l'invention, dans le mode d'alarme, à chaque instant, ladite valeur de déclenchement est calculée selon une fonction polynomiale d'au moins une partie desdites mesures d'accélération $\gamma'_k$ à puissances impaires de manière à rendre négligeables lesdites valeurs de déclenchement résultant d'un phénomène vibratoire.

Cela permet d'intégrer les mesures d'accélération pour obtenir des mesures de déplacement. La limitation aux puissances impaires permet de garantir que les valeurs de déclenchement sont représentatives de déplacements unidirectionnels.

Avantageusement et selon l'invention :

- les périodes d'échantillonnage Tk du mode de pré-alarme sont choisies constantes dans le temps de valeur T, ladite valeur T ne respectant pas le critère de Shannon Nyquist,
- les périodes d'échantillonnage T'k du mode d'alarme sont choisies constantes dans le temps de valeur T', ladite valeur T' étant inférieure à T et respectant le critère de Shannon Nyquist.

Le mode de pré-alarme permet d'évaluer le besoin d'affiner l'analyse du signal d'accélération. Néanmoins, pour limiter le recours aux ressources calculatoires et énergétiques, l'échantillonnage du mode de pré-alarme est réalisé sans respecter le critère de Shannon Nyquist. Cela va à l'encontre de la théorie du traitement de l'information qui stipule qu'un signal doit être échantillonné à la fréquence de Shannon Nyquist pour ne perdre aucune information. Les inventeurs ont découvert que cet échantillonnage initial destructif permet néanmoins d'opérer un premier tri supprimant la plupart des situations non représentatives d'un déplacement unidirectionnel. Par ailleurs, ce premier tri limite de manière remarquable les situations où le mode d'alarme est activé à tort, c'est-à-dire où l'échantillonnage non destructif est effectué sans détection finale d'un déplacement unidirectionnel réel. La période T est choisie de telle manière qu'aucune situation de déplacement unidirectionnel ne soit éliminée lors de ce premier tri. Dans le mode d'alarme en revanche, l'échantillonnage est choisi de manière à ne perdre aucune information de manière à précisément définir si les mesures d'accélération délivrées sont représentatives ou non d'un déplacement unidirectionnel. L'échantillonnage est alors choisi de manière à respecter le critère de Shannon Nyquist. Ce traitement à deux niveaux permet de manière simple et efficace de limiter les besoins en ressources et de garantir des détections fiables de tout mouvement unidirectionnel.

Avantageusement et selon l'invention, dans le mode d'alarme, si pour un nombre prédéterminé d'instants consécutifs, lesdites valeurs de déclenchement calculées appartiennent à des intervalles prédéterminés de valeurs, dits intervalles de dérives, un troisième mode de fonctionnement est activé dans lequel :

- la moyenne des échantillons $\gamma'_k$ desdites mesures d'accélérations dudit mode d'alarme est calculée sur une période de temps donnée, dite moyenne de calibration,
- une nouvelle valeur seuil dudit premier mode de fonctionnement est évaluée à partir de cette moyenne de calibration,
- le premier mode de fonctionnement est réactivé.

La détection d'une répétition d'activation du mode d'alarme conduisant aux mêmes résultats de non détection d'un mouvement unidirectionnel est indicatrice d'une probable dérive des composants utilisés pour délivrer les mesures d'accélération. L'invention prévoit à cet effet des intervalles de valeurs représentatifs de situations courantes et la possibilité de passer dans un mode de calibration aux fms de calibrer les composants utilisés pour délivrer les mesures d'accélération si les valeurs de déclenchement mesurées indiquent des activations intempestives répétées du mode d'alarme sans mouvement unidirectionnel notable.

Avantageusement et selon l'invention, dans ledit mode de pré-alarme, ladite valeur d'état, fonction d'au moins une partie des mesures d'accélération $\gamma_k$, est définie par la valeur absolue de l'échantillon $\gamma_k$.

Cela limite la quantité de ressources nécessaires pour élaborer la valeur d'état tout en limitant de manière notable les passages intempestifs en mode d'alarme suite à la comparaison entre cette valeur d'état et la valeur seuil.

L'invention s'étend à un capteur accélérométrique de détection de mouvement comprenant :

- un boîtier,
- au moins un accéléromètre solidaire du boîtier et adapté pour fournir des mesures d'accélération instantanées selon au moins une direction,
- des moyens de connexion du capteur à une source d'énergie électrique,
- des moyens de traitement des mesures d'accélération délivrées par au moins un accéléromètre comprenant un premier module correspondant à un premier mode de fonctionnement, dit mode de pré-alarme comprenant :

  • des moyens d'enregistrement d'une pluralité d'échantillons $\gamma_k$ des mesures d'accélérations instantanées prises successivement à des intervalles de temps Tk prédéterminés,
  • des moyens de calcul, à chaque instant, d'au moins une valeur, dite valeur d'état, selon une fonction d'au moins une partie des mesures d'accélérations $\gamma_k$,
  • des moyens de comparaison, à chaque instant de ladite valeur d'état à une valeur seuil.
    Un capteur accélérométrique de détection de mouvement selon l'invention est caractérisé en ce que les moyens de traitement comprennent :

- un deuxième module correspondant à un deuxième mode de fonctionnement, dit mode d'alarme comprenant des moyens d'enregistrement d'une pluralité d'échantillons $\gamma'_k$ des mesures d'accélération prises successivement à des intervalles de temps T'k prédéterminés, la valeur moyenne des T'k étant inférieure à la valeur moyenne des Tk,
- des moyens de changement de mode de fonctionnement adaptés pour passer dudit mode de pré-alarme audit mode d'alarme si à un instant donné, ladite valeur d'état est supérieure à ladite valeur seuil.

Un capteur accélérométrique selon l'invention fournit ainsi des moyens de détection de tout déplacement d'un mouvement du boîtier tout en limitant le recours aux ressources calculatoires et énergétiques par la présence de moyens de traitement à deux niveaux et de moyens de basculement d'un niveau à l'autre. Le premier module assure qu'une valeur d'état est évaluée et comparée à une valeur seuil, ce qui selon le résultat de cette comparaison conduit ou à une mise en veille de durée Tk de l'accéléromètre solidaire du boîtier ou à une analyse approfondie des mesures d'accélération. Ce test permet de manière simple et efficace de rejeter la plupart des situations qui sont clairement des situations de non alarme, c'est-à-dire des situations non représentatives d'un déplacement de l'objet sur lequel le capteur accélérométrique est fixé. Si l'analyse de premier niveau indique une possible situation d'alarme, les moyens de changement de mode de fonctionnement activent le deuxième module qui assure une analyse approfondie des mesures délivrées par l'accéléromètre par un échantillonnage plus fin, la valeur moyenne des intervalles de temps T'k étant inférieure à la valeur moyenne des intervalles de temps Tk.

Selon l'invention, ledit deuxième module correspondant audit mode d'alarme comprend :

- des moyens de calcul, à chaque instant, d'au moins une valeur, dite valeur de déclenchement, selon une fonction d'au moins une partie des mesures d'accélération $\gamma'_k$,
- des moyens de comparaison, à chaque instant de ladite valeur de déclenchement à au moins une valeur prédéterminée, dite valeur de déplacement non nominal.

Un capteur selon l'invention comprend également des moyens d'émission d'un signal représentatif d'une détection d'un mouvement si ladite valeur de déclenchement est supérieure à ladite valeur de déplacement non nominal.

Un capteur accélérométrique selon l'invention assure ainsi une détection de tout mouvement du boîtier et est adapté pour émettre un signal de déclenchement d'alarme si un mouvement est détecté. L'émission du signal représentatif de la détection d'un mouvement par le capteur accélérométrique se fait si ladite valeur de déclenchement est supérieure à ladite valeur de déplacement non nominal. Cette valeur de déplacement non nominal peut être évaluée et/ou choisie différemment selon les déplacements non nominaux qu'elle doit permettre de détecter. Cette valeur doit être représentative d'au moins un déplacement non nominal pour l'utilisation considérée. A ce titre, selon un mode de réalisation, cette valeur de déplacement non nominal peut correspondre à une valeur donnée d'accélération. Selon un autre mode de réalisation, est valeur de déplacement non nominal, toute valeur supérieure à une valeur donnée. Selon un autre mode de réalisation, est valeur de déplacement non nominal, un ensemble de valeurs prédéterminées. Le choix de ces valeurs de déplacement non nominal permet ainsi de paramétrer un capteur selon l'invention, par exemple en autorisant certains mouvements et en en interdisant d'autres.

Selon l'invention lesdits moyens de calcul dudit mode d'alarme sont adaptés pour calculer, à chaque instant, une valeur de déclenchement selon une fonction polynomiale d'au moins une partie des mesures d'accélération $\gamma'_k$ à puissances impaires de manière à rendre négligeable lesdites valeurs de déclenchement résultant d'un phénomène vibratoire.

Un capteur selon l'invention assure ainsi une intégration des mesures d'accélération de manière à obtenir des mesures de déplacement. La limitation aux puissances impaires permet de garantir que les valeurs de déclenchement sont uniquement représentatives de déplacements unidirectionnels.

Avantageusement et selon l'invention, les moyens de traitement comprennent un troisième module correspondant à un troisième mode de fonctionnement comprenant :

- des moyens de calcul, à chaque instant de la moyenne des échantillons $\gamma'_k$ desdites mesures d'accélération dudit mode d'alarme, dite moyenne de calibration, sur une période de temps donnée,
- des moyens d'attribution de cette moyenne à ladite valeur seuil.

Un capteur selon l'invention gère ainsi de manière autonome les dérives de ces composants liées, notamment, à l'environnement.

Avantageusement et selon l'invention, lesdits moyens de changement de mode de fonctionnement sont adaptés pour :

- passer du mode d'alarme au mode de calibration si pour un nombre donné d'instants, lesdites valeurs de déclenchement appartienent à des intervalles prédéterminés de valeur, dits intervalles de dérive,
- passer du mode de calibration au mode de pré-alarme lorsque les moyens d'attribution ont attribué à ladite valeur seuil, ladite moyenne de calibration.

Avantageusement, un capteur selon l'invention comprend au moins un capteur adapté pour fournir des mesures d'accélération selon au moins deux directions.

Avantageusement, un capteur selon l'invention comprend des moyens pour fixer le boîtier à un objet mobilier de manière à ce que tout déplacement dudit objet mobilier entraîne la détection d'un mouvement par ledit capteur.

Un capteur selon l'invention permet ainsi de protéger tout objet mobilier en se fixant à ce dernier, par exemple, par des moyens adhésifs, et en délivrant un signal de déclenchement d'alarme dès que l'objet mobilier est déplacé. Un capteur selon l'invention est donc particulièrement adapté pour protéger des oeuvres picturales ou sculpturales, des meubles meublants de valeur, des dossiers, des systèmes informatiques, des appareils électroménagers, des objets non renfermés dans une enceinte close tels que des meubles de jardin, des coffres-forts portatifs,...)

L'invention s'étend à un système d'alarme comprenant :

- au moins un capteur accélérométrique de détection de mouvement selon l'invention,
- un dispositif d'émission de signaux d'alarme,
- un module de déclenchement d'alarme adapté pour commander l'émission de signaux d'alarme par au moins le dispositif d'émission de signaux d'alarme si au moins un capteur de détection de mouvement émet un signal représentatif d'une détection de mouvement.

L'invention concerne en outre un procédé de traitement des mesures d'accélération fournies par un accéléromètre, un capteur accélérométrique de détection de mouvement, et un système d'alarme comprenant de tels capteurs, caractérisés en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :

- la figure 1 est une vue schématique d'un capteur accélérométrique selon l'invention comprenant un accéléromètre adapté pour fournir des mesures d'accélération selon deux directions,
- la figure 2 est une représentation schématique d'un signal d'accélération selon une direction mesurée par un accéléromètre d'un capteur selon l'invention,
- la figure 3a est une représentation schématique d'un signal d'accélération temporel sur lequel apparaissent différentes situations d'alarme et de non alarme,
- la figure 3b est une représentation schématique du signal de la figure 3 a traité et analysé par le procédé selon l'invention,
- la figure 4 est une représentation schématique des étapes mises en oeuvre dans un procédé selon l'invention.

Selon un mode avantageux de mise en oeuvre d'un procédé selon l'invention, on utilise un capteur 1 accélérométrique comprenant un accéléromètre 2 apte à fournir des mesures d'accélération instantanées sur deux directions $\vec{x}$ et $\vec{y}$ orthogonales.

Un procédé selon l'invention vise à obtenir à partir des mesures d'accélération fournies par l'accéléromètre associé au capteur 1, une information sur le déplacement unidirectionnel dudit capteur 1 tout en limitant ses besoins en ressources calculatoires et énergétiques.

Dans un premier mode de fonctionnement, dit mode de pré-alarme, à chaque instant $k$, le signal d'accélération sur chacun des axes $\vec{x}$ et $\vec{y}$ défmi par une suite de mesures d'accélérations instantanées est échantillonné suivant une période de temps $T$, ce qui permet de mettre en mémoire, respectivement des pluralités d'échantillons $\gamma_k$ et $\beta_k$, représentatifs des mesures d'accélération sur les axes respectifs $\vec{x}$ et $\vec{y}$. Dans la suite, on ne présente que les opérations réalisées sur les échantillons $\gamma_k$ représentatifs du signal d'accélération suivant l'axe $\vec{x}$, étant entendu que les opérations réalisées sur les mesures d'accélération instantanées $\beta_k$ suivant la direction $\vec{y}$ sont similaires.

A chaque instant $k$ , une valeur $m_k$, dite valeur d'état est calculée suivant une fonction des échantillons $\gamma_k$ et comparée à une valeur seuil. Selon un mode avantageux de réalisation du procédé, sont dérivés des échantillons $\gamma_k$, des valeurs $x_k$ représentatives des déviations des échantillons $\gamma_k$ par rapport à une référence $R_\gamma$ selon l'équation $x_k = \gamma_k - R_\gamma$. La valeur d'état $m_k$ est alors fonction des échantillons $x_k$. Cette valeur $m_k$ est comparée à une valeur seuil $\Omega_x$ prédéterminée.

Dans la suite, seul le procédé selon ce mode avantageux de mise en oeuvre qui utilise les échantillons $x_k$ est décrit. Les mêmes opérations peuvent être directement réalisées sur les échantillons $\gamma_k$ au coefficient $R_\gamma$ près.

Selon un mode de mise en oeuvre du procédé selon l'invention, la valeur d'état est calculée selon la

formule : $m_k = \dfrac{x_k + x_{k-1}}{2}$. Selon un autre mode de mise en oeuvre du procédé selon l'invention, la valeur d'état est calculée selon la formule $m_k = |x_k|$. Selon d'autres modes de mise en oeuvre du procédé selon l'invention, $m_k$ est une fonction des échantillons $x_k$. La forme de $m_k$ doit être choisie de telle sorte que $m_k$ offre un bon compromis entre le coût calculatoire et la capacité de discrimination entre une probable situation de déplacement unidirectionnel et une situation de non alerte.

A chaque instant $k$, si $m_k > \Omega_x$, alors le risque d'être en présence d'un signal représentatif d'un déplacement unidirectionnel est fort. Dès lors, le procédé passe dans un deuxième mode de fonctionnement, dit mode d'alarme. Ce mode est susceptible de conduire à la détection d'une condition d'alarme. Dans le cas contraire, le procédé reste dans le mode de pré-alarme et l'accéléromètre peut être mis en veille jusqu'à l'instant k+1, ce qui permet d'économiser les sources énergétiques utiles pour la mise en oeuvre du procédé.

Lorsque le procédé passe dans le mode d'alarme, cela signifie qu'il existe un risque de détection d'un déplacement unidirectionnel significatif susceptible de nécessiter l'émission d'un signal de déclenchement d'alarme. Une analyse plus fine est alors mise en oeuvre. Pour ce faire, le signal d'accélération est échantillonné suivant une période de temps $T'$, ce qui permet de mettre en mémoire des échantillons $\gamma'_k$ desquels sont extraits, à l'instar du mode de pré-alerte, les déviations $x'_k$ selon $x'_k = \gamma'_k - R_\gamma$. Le mode d'alarme étant destiné à déterminer si un déplacement unidirectionnel s'est produit, l'échantillonnage est réalisé de manière à garder le maximum d'informations du signal. Dès lors, la période $T'$ est avantageusement choisie de telle manière qu'elle respecte le critère de Shannon Nyquist. Selon un mode de réalisation avantageux de l'invention et compte tenu du fait que la fréquence maximale d'un mouvement initié par un humain est de 50 Hz, la fréquence d'échantillonnage du mode d'alerte est fixée à 100 Hz. Selon un autre mode de réalisation de l'invention et selon les mouvements que le procédé doit déceler, cette fréquence d'échantillonnage peut prendre d'autres valeurs.

Selon encore un autre mode de réalisation, la période T' peut ne pas respecter le critère de Shannon Nyquist, en prévoyant que le mode d'alarme comprend différents sous-modes, chaque sous-mode étant adapté pour effectuer, à l'instar du mode de pré-alarme, un test conditionnant le passage dans le sous-mode d'alarme suivant si l'analyse affinée de la situation indique toujours une probable condition d'alarme. Chaque sous-mode échantillonne le signal à une période plus fine, sans nécessairement respecter le critère de Shannon Nyquist.

A partir de ces échantillons $x'_k$, est évaluée une valeur, dite valeur $A_x$ de déclenchement. Selon le mode de mise en oeuvre du procédé, cette valeur $A_x$ de déclenchement est une fonction polynomiale des $x'_k$, à puissances impaires. Cela permet de rendre $A_x$ négligeable si les échantillons $x'_k$ sont représentatifs d'un phénomène vibratoire. Selon un mode avantageux de mise en oeuvre du procédé, la fonction polynomiale correspond à une double sommation des échantillons $x'_k$ selon l'équation suivante :

$$A_x = \left| \sum_{i=1}^{p} \left( \frac{1}{n} \sum_{j=0}^{n-1} x'_{i-j} \right) \right| \text{ où } p \text{ et } n \text{ sont des nombres}$$

prédéterminés.

Le procédé associe ensuite à cette valeur de déclenchement, un ordre ou non de déclenchement d'un signal d'alarme. Pour ce faire, selon un mode de réalisation du procédé, la valeur $A_x$ de déclenchement est comparée à une valeur $S$, dite valeur de déplacement non nominal, prédéterminée par expérience. Si $A_x > S$, alors, les échantillons à l'origine $A_x$ sont représentatifs d'un mouvement unidirectionnel, ce qui entraîne l'émission d'un signal de déclenchement d'alarme.

Selon un autre mode de réalisation, le procédé fait appel à une pluralité de niveaux non nominaux $S_i$, par exemple avec $i \in [0,9]$. Ces niveaux prédéterminés sont déterminés par expérience et permettent d'adapter le niveau de déclenchement d'alarme au type d'environnement auquel l'accéléromètre est soumis. Ainsi, selon un mode de réalisation, $S_0$ et $S_1$ correspondent à des valeurs de déclenchement non significatives, $S_2$ correspond à un environnement stable sans aucune vibration, $S_3$ correspond à un environnement faiblement vibratoire, comme une zone située au voisinage d'une voie de chemin de fer, etc. Selon ce mode de réalisation, le procédé évalue dans quel intervalle $[S_i,S_{i+1}]$ se situe la valeur $A_x$ de déclenchement, et réagit par l'émission d'un signal de déclenchement d'alarme si le seuil de sensibilité choisi est inférieur à $S_i$.

Un capteur mettant en oeuvre le procédé de l'invention comprend alors des moyens pour choisir le niveau de déclenchement adapté au type d'objet auquel il est associé ou selon un autre mode de réalisation transmet à une unité centrale associé le niveau non nominal $i$ de l'intervalle comprenant la valeur $A_x$ de déclenchement. Une unité centrale associée comprend alors des moyens programmables pour déterminer si elle doit effectivement activer l'alarme pour le niveau reçu. Cela permet notamment de disposer de plusieurs capteurs, chacun pouvant être selon l'objet sur lequel il est fixé, réglé à un niveau propre.

Selon un mode de réalisation avantageux du procédé, les niveaux $S_0$ et $S_1$ permettent d'auto-calibrer un capteur mettant en oeuvre un procédé selon l'invention. Ces niveaux définissent des intervalles dits de dérive. Par exemple, si pour un nombre donné $d_0$ d'instants consécutifs, la valeur $A_x$ de déclenchement appartient à l'intervalle de dérive $S_0$, cela indique que le procédé passe de manière intempestive du mode de pré-alarme au mode d'alarme, ce qui entraîne, notamment une consommation inutile de l'énergie du système. Le procédé prévoit alors une auto-calibration du système permettant de réajuster le seuil $\Omega_x$ et le niveau $R_\gamma$ de manière à limiter les passages intempestifs en mode alarme.

Pour ce faire, le procédé passe dans un troisième mode de fonctionnement, dit mode de calibration, adapté pour réévaluer les niveaux de références $R_\gamma$ et $R_\beta$ à partir des derniers échantillons $\gamma'_k$ et $\beta'_k$ acquis selon :

$$R_\gamma = \frac{1}{m} \sum_{j=1}^{m} \gamma'_j \text{ et } R_\beta = \frac{1}{m} \sum_{j=1}^{m} \beta'_j \text{ où } m \text{ est}$$

une valeur prédéterminée.

Le procédé repasse alors dans le mode de pré-alarme dont les niveaux de référence sont mis à jour.

Selon un mode avantageux de mise en oeuvre du procédé, les valeurs $\Omega_x$ et $\Omega_y$ sont également mis à jour si pour un nombre donné d'instants consécutifs, la valeur $A_x$ de déclenchement appartient à l'intervalle non nominal $S_0$ ou $S_1$ et ce par un calcul statistique.

Un procédé selon l'invention permet ainsi d'élaborer un signal de déclenchement en réponse à la détection de tout déplacement unidirectionnel d'un capteur accélérométrique selon l'invention muni d'un accéléromètre. Un procédé selon l'invention permet également d'auto-calibrer un capteur accélérométrique selon l'invention et permet ainsi de s'affranchir des dérives inhérentes liées notamment aux changements climatiques. Un procédé selon l'invention permet également de limiter les fausses détections tout en limitant la charge calculatoire, et donc l'énergie nécessaire.

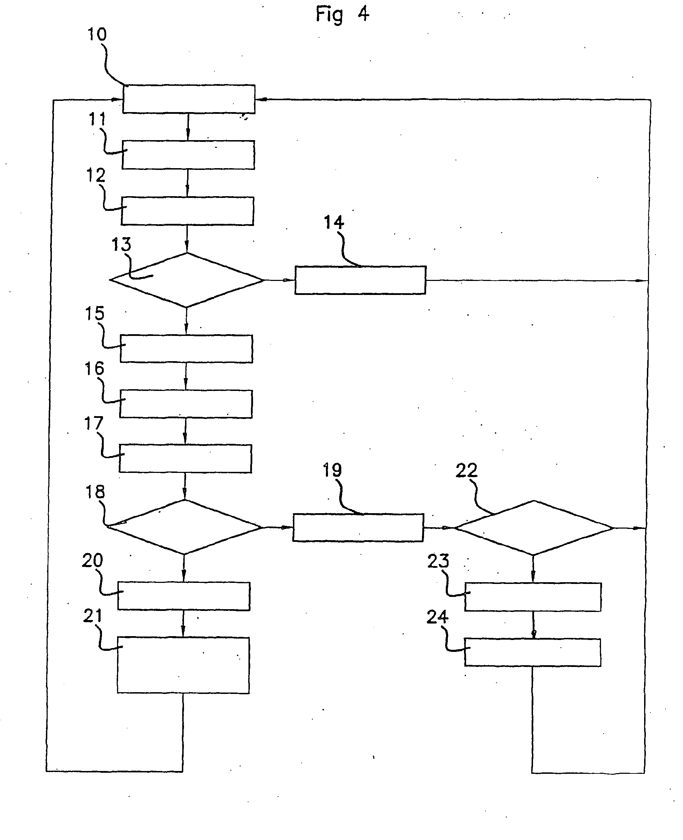

La figure 4 est une représentation schématique de la succession des étapes mises en oeuvre dans un procédé selon l'invention. A l'étape 10, les échantillons $\gamma_k$ délivrés par un accéléromètre 2 sont mémorisés. A l'étape 11, les valeurs $x_k$ sont calculées. A l'étape 12, la

valeur d'état $m_k$ est calculée. A l'étape 13, la valeur d'état $m_k$ est comparée à la valeur seuil $\Omega_x$. Si la valeur seuil $\Omega_x$ est supérieure à la valeur d'état $m_k$, une variable, dite drapeau, est mise à zéro à l'étape 14. Si la valeur d'état $m_k$ est supérieure ou égale à la valeur seuil $\Omega_x$, les échantillons $\gamma'_k$ sont mémorisés à l'étape 15. A l'étape 16, les valeurs $x'_k$ sont calculées. A l'étape 17, la valeur $A_x$ de déclenchement est calculée. A l'étape 18, la valeur $A_x$ de déclenchement est comparée aux valeurs $S_i$ prédéterminées.

Si la valeur $i$ est inférieure à 2, ladite valeur drapeau est incrémentée d'une unité à l'étape 19. A l'étape 22, la valeur de drapeau est comparée à une valeur $d_0$ prédéterminée. Si $d_0$ est supérieure à ladite valeur drapeau, retour à l'étape 10. Si la valeur drapeau est supérieure à $d_0$, la valeur $R_\gamma$ est calculée à l'étape 23 et la valeur seuil $\Omega_x$ est calculée à l'étape 24 et retour à l'étape 10.

Si la valeur $i$ est supérieure à 2, alors la valeur drapeau est mise à zéro à l'étape 20. L'alarme de niveau $i$ est alors déclenchée à l'étape 21.

Les mêmes opérations sont réalisées sur les échantillons $\beta_k$ représentatifs des mesures selon l'axe $\vec{y}$. Un signal de déclenchement d'alarme est émis si au moins une valeur de déclenchement $A_x$ ou $A_y$ selon l'un des deux axes appartient à un intervalle $S_i$, et $i$ supérieure à 2.

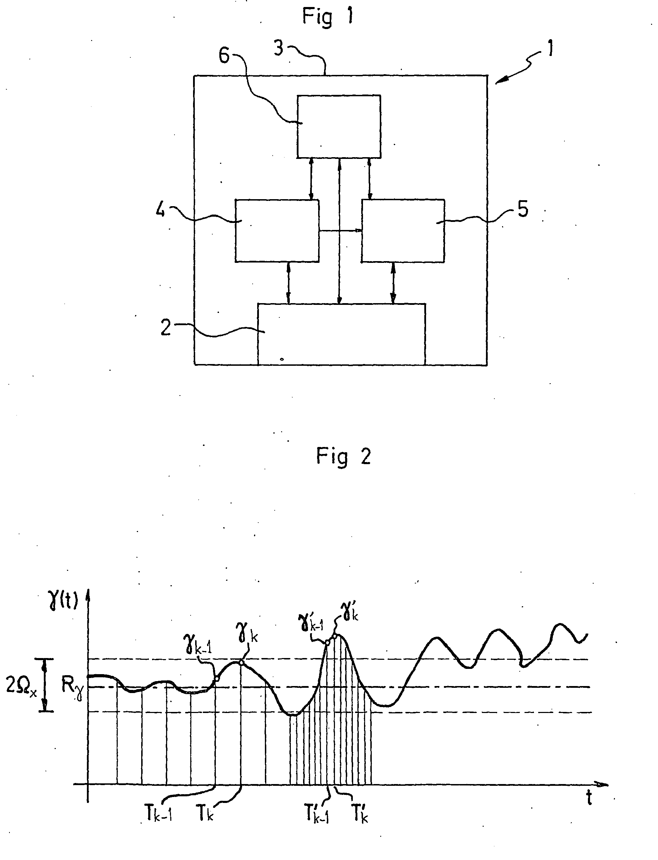

La figure 1 est une représentation schématique d'un mode de réalisation d'un capteur selon l'invention. Le capteur 1 comprend un boîtier 3 sur la paroi intérieure duquel est fixé un accéléromètre 2. Cet accéléromètre 2 peut être un accéléromètre connu, par exemple du type circuit intégré tel que l'accéléromètre ADXL 311 ou ADXL 322 commercialisé par la société ANALOG DEVICES (NORWOOD, USA).

Le boîtier 3 peut être réalisé par tout moyen connu en soi et adapté pour pouvoir être solidaire de l'accéléromètre 2. C'est-à-dire que le boîtier doit comprendre au moins une partie rigide sur laquelle peut venir se fixer l'accéléromètre 2. La fixation de l'accéléromètre sur la partie rigide du boîtier 3 peut être réalisée par des moyens adhésifs, par des moyens de fixation du type vis/écrou, rivet, ou tout autre moyen adapté pour maintenir deux dispositifs rigides solidaires l'un à l'autre. Le boîtier 3 peut être réalisé en un matériau plastique rigide, en métal, en bois, etc. Le boîtier 3 est avantageusement réalisé avec un matériau résistant qui n'absorbe pas les vibrations de telle sorte que le boîtier 3 transmette à l'accéléromètre 2, solidaire du boîtier 3, toutes les contraintes qu'il subit. De préférence, le boîtier 3 est fermé et enferme l'accéléromètre à l'intérieur du boîtier 3.

Le capteur 1 comprend également des moyens de traitement des mesures d'accélération fournies par l'accéléromètre permettant de détecter un déplacement unidirectionnel. Selon un mode de réalisation du capteur, ces moyens de traitement sont numériques. Selon un autre mode de réalisation du capteur, ces moyens sont analogiques, ou une combinaison de moyens numériques et analogiques. Ils comprennent par exemple au moins un microprocesseur, au moins une mémoire et au moins une horloge. Selon un mode de réalisation, les moyens de traitement comprennent un premier module, dit module 4 de pré-alarme, correspondant au mode de pré-alarme, un deuxième module, dit module 5 d'alarme correspondant au mode d'alarme et un troisième module, dit module 6 de calibration correspondant au mode de calibration. Ces modules sont associés à une mémoire unique ou chacun à une mémoire dédiée. Ils peuvent être tous réunis dans un même composant (circuit intégré).

Selon un mode de réalisation avantageux, les mesures d'accélérations sont mémorisées dans une mémoire de manoeuvre, ou dans une mémoire volatile, ou dans une mémoire vive, ou dans une mémoire dynamique, ou dans une mémoire tampon ou dans une mémoire externe, avant d'être traitées et analysées par les moyens de traitement.

On entend par module, ici et dans tout le texte, un élément matériel, ou un sous-ensemble d'un programme logiciel, pouvant être compilé séparément, soit pour une utilisation indépendante, soit pour être assemblé avec d'autres modules d'un programme, ou une combinaison d'un élément matériel et d'un sous-programme logiciel.

Chacun des modules peut comprendre un microprocesseur dédié ou un microprocesseur commun à l'ensemble des modules. Un mode de réalisation particulièrement avantageux de l'invention prévoit un unique microprocesseur, une unique mémoire et un programme unique intégrant le module 4 de pré-alarme, le module 5 d'alarme et le module 6 de calibration. Le passage d'un mode de fonctionnement à un autre est réalisé par exemple par la modification d'un champ enregistré à une adresse mémoire prédéterminée que viennent scruter régulièrement les différents modules concernés. Tout autre moyen de faire interagir entre eux différents modules logiciels est également adapté pour assurer l'activation de chacun des modules d'un capteur selon l'invention.

Le capteur 1 comprend également des moyens d'émission d'un signal représentatif d'une détection d'un mouvement. Ces moyens sont de préférence associés au module 5 d'alarme et peuvent comprendre au moins une antenne adaptée pour émettre des signaux radiofréquences à destination d'une unité centrale de système d'alarme ou peuvent comprendre des moyens propres d'émission de signaux d'alarme comme une sirène intégrée ou d'émission d'un message à destination d'un téléphone portatif, notamment du type GSM.

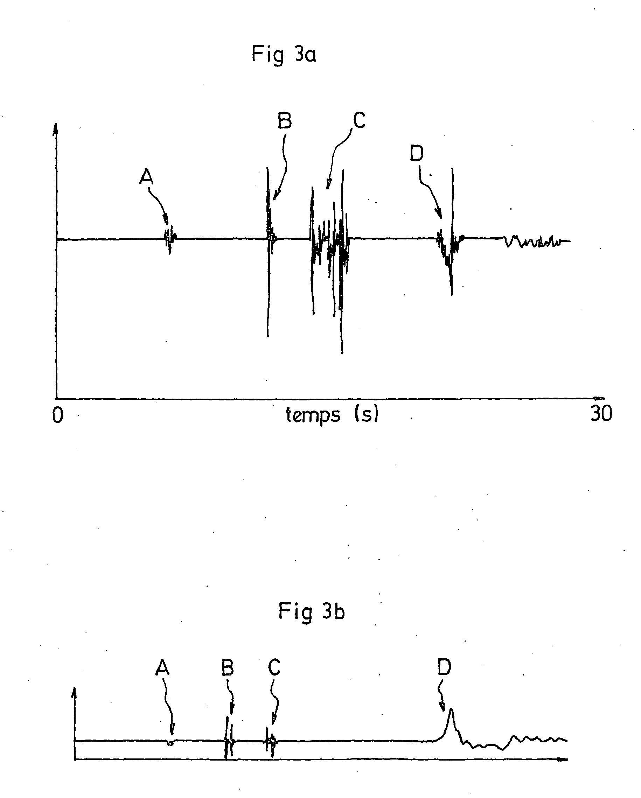

La figure 3a présente un signal d'accélération enregistré par un capteur accélérométrique selon l'invention appliqué sur une porte initialement fermée. Le signal présente différents pics distincts correspondant à différentes actions opérées sur la porte. L'événement A correspond à trois coups frappés sur la porte. L'événement B correspond à un coup de genou donné dans la porte. L'événement C correspond à l'actionnement de la poignée de la porte sans ouverture de la porte. L'événement D correspond à l'ouverture de la porte.

La figure 3b présente la variation au cours du temps des valeurs $A_x$ évaluées par les moyens de traitement des mesures d'accélération en vue de l'élaboration d'un signal de déclenchement d'alarme. Il en ressort que seule l'ouverture effective de la porte engendre des valeurs successives de $A_x$ dépassant un certain seuil. Le choix des niveaux d'alarme $S_i$, ou niveaux non nominaux, permet ainsi de régler le capteur à son utilisation spécifique et assure une bonne discrimination entre une ouverture de porte et un simple coup de genou dans cette dernière.

Un capteur accélérométrique selon l'invention est particulièrement adapté à la protection des objets mobiliers, quelles que soient les conditions climatiques, sismiques et d'environnement au sein desquelles ils sont agencés. Un capteur selon l'invention est également particulièrement bien adapté pour assurer une détection efficace dans le temps de tout déplacement unidirectionnel. Ainsi, avec une pile classique que l'on trouve dans le commerce, du type 2 A/h, un capteur accélérométrique selon l'invention a, en utilisation normale, une durée de vie de plus d'un an. Un capteur selon l'invention est donc particulièrement bien adapté pour équiper un musée, une maison secondaire ou tout bâtiment qui peut rester longtemps sans surveillance directe.

Un capteur accélérométrique est avantageusement utilisé dans un système d'alarme selon l'invention. Un système d'alarme selon l'invention comprend un module d'alarme adapté pour commander l'émission de signaux d'alarme par au moins un dispositif d'émission de signaux d'alarme. On entend par dispositif d'émission de signaux d'alarme, tout dispositif adapté pour rendre remarquable une survenue d'une condition d'alarme de manière à attirer l'attention. Selon un mode de réalisation de l'invention, le dispositif d'émission de signaux d'alarme peut être une sirène d'alarme adaptée pour émettre un signal sonore. En variante ou en combinaison, il peut s'agir d'un gyrophare adapté pour émettre un signal lumineux alternatif. En variante ou en combinaison, il peut s'agir d'un téléphone portatif, notamment du type GSM, adapté pour recevoir un message texto. En variante ou en combinaison, il peut s'agir d'un ordinateur relié au réseau Internet, à un central téléphonique, etc.

## Revendications

**1.** Procédé de traitement des mesures d'accélération instantanées délivrées par un accéléromètre (2) selon au moins une direction en vue d'une détection d'une condition de déclenchement d'un signal d'alarme dans lequel :

    - dans un premier mode de fonctionnement, dit mode de pré-alarme, des mesures d'accélération $\gamma_k$ sont réalisées successivement à des intervalles de temps Tk prédéterminés,
    - à chaque instant, au moins une valeur, dite valeur d'état, est calculée selon une fonction d'au moins une partie des mesures d'accélération $\gamma_k$,
    - chaque valeur d'état est comparée à une valeur seuil,

**caractérisé en ce que** si ladite valeur d'état est supérieure à ladite valeur seuil, un deuxième mode de fonctionnement, dit mode d'alarme, distinct du premier mode de fonctionnement est activé, dans lequel :

    - des mesures d'accélération $\gamma'_k$ sont réalisées successivement à des intervalles de temps T'k prédéterminés, la valeur moyenne des intervalles de temps T'k étant inférieure à la valeur moyenne des intervalles de temps Tk,
    - à chaque instant, au moins une valeur, dite valeur de déclenchement, est calculée selon une fonction impaire d'au moins une partie desdites mesures d'accélération $\gamma'_k$,
    - ladite valeur de déclenchement est comparée à au moins une valeur prédéterminée, dite valeur de déplacement non nominal,
    - si ladite valeur de déclenchement est supérieure à ladite valeur de déplacement non nominal, une condition de déclenchement d'alarme est vérifiée.

**2.** Procédé selon la revendication 1, **caractérisé en ce que** dans le mode d'alarme, à chaque instant, ladite valeur de déclenchement est calculée selon une fonction polynomiale d'au moins une partie desdites mesures d'accélération $\gamma'_k$ à puissances impaires de manière à rendre négligeables lesdites valeurs de déclenchement résultant d'un phénomène vibratoire.

**3.** Procédé selon l'une des revendications 1 ou 2, **caractérisé en ce que** :

    - les périodes d'échantillonnage Tk du mode de pré-alarme sont choisies constantes dans le temps de valeur T, ladite valeur T ne respectant pas le critère de Shannon Nyquist,
    - les périodes d'échantillonnage T'k du mode d'alarme sont choisies constantes dans le temps de valeur T', ladite valeur T' étant inférieure à T et respectant le critère de Shannon Nyquist.

**4.** Procédé selon l'une des revendications 1 à 3, **caractérisé en ce que** dans le mode d'alarme, si pour un nombre prédéterminé d'instants consécutifs, lesdites valeurs de déclenchement calculées appartiennent à des intervalles prédéterminés de valeurs, dits intervalles de dérives, un troisième mode de fonctionnement est activé dans lequel :

- la moyenne des échantillons $\gamma'_k$ desdites mesures d'accélération dudit mode d'alerte est calculée sur une période de temps donnée, dite moyenne de calibration,
- une nouvelle valeur seuil dudit premier mode de fonctionnement est évaluée à partir de cette moyenne de calibration,
- le premier mode de fonctionnement est réactivé.

5. Procédé selon l'une des revendications 1 à 4, **caractérisé en ce que** dans ledit mode de pré-alarme, ladite valeur d'état, fonction d'au moins une partie des mesures d'accélération $\gamma_k$, est définie par la valeur absolue de l'échantillon $\gamma_k$.

6. Capteur de détection de mouvement comprenant :

- un boîtier (3),
- au moins un accéléromètre (2) solidaire du boîtier (1) et adapté pour fournir des mesures d'accélération instantanées selon au moins une direction,
- des moyens de connexion du capteur à une source d'énergie électrique,
- des moyens de traitement des mesures d'accélération délivrées par au moins un accéléromètre (2) comprenant un premier module (4) correspondant à un premier mode de fonctionnement, dit mode de pré-alarme comprenant :

. des moyens d'enregistrement d'une pluralité d'échantillons $\gamma_k$ des mesures d'accélération instantanées prises successivement à des intervalles de temps Tk prédéterminés,
. des moyens de calcul, à chaque instant, d'au moins une valeur, dite valeur d'état, selon une fonction d'au moins une partie des mesures d'accélérations $\gamma_k$,
des moyens de comparaison, à chaque instant de ladite valeur d'état à une valeur seuil,

**caractérisé en ce que** les moyens de traitement comprennent :

- un deuxième module (5) correspondant à un deuxième mode de fonctionnement, dit mode d'alarme comprenant :

. des moyens d'enregistrement d'une pluralité d'échantillons $\gamma'_k$ des mesures d'accélération prises successivement à des intervalles de temps T'k prédéterminés, la valeur moyenne des T'k étant inférieure à la valeur moyenne des Tk,
. des moyens de calcul, à chaque instant, d'au moins une valeur, dite valeur de déclenchement, selon une fonction polynomiale d'au moins une partie des mesures d'accélération $\gamma'_k$ à puissances impaires,
. des moyens de comparaison, à chaque instant de ladite valeur de déclenchement à au moins une valeur prédéterminée, dite valeur de déplacement non nominal,

- des moyens de changement de mode de fonctionnement adaptés pour passer dudit mode de pré-alarme audit mode d'alarme si à un instant donné, ladite valeur d'état est supérieure à ladite valeur seuil.

7. Capteur selon la revendication 6, **caractérisé en ce qu'**il comprend des moyens d'émission d'un signal représentatif d'une détection d'un mouvement si ladite valeur de déclenchement est supérieure à ladite valeur non nominal.

8. Capteur selon l'une des revendications 6 ou 7, **caractérisé en ce que** les moyens de traitement comprennent un troisième module (6) correspondant à un troisième mode de fonctionnement, dit mode de calibration, comprenant :

- des moyens de calcul, à chaque instant de la moyenne des échantillons $\gamma'_k$ desdites mesures d'accélération dudit mode d'alarme, dite moyenne de calibration, sur une période de temps donnée,
- des moyens d'attribution de cette moyenne à ladite valeur seuil.

9. Capteur selon la revendication 8, **caractérisé en ce que** lesdits moyens de changement de mode de fonctionnement sont adaptés pour :

- passer du mode d'alarme au mode de calibration si pour un nombre donné d'instants, lesdites valeurs de déclenchement appartiennent à des intervalles prédéterminés de valeur, dits intervalles de dérive,
- passer du mode de calibration au mode de pré-alarme lorsque les moyens d'attribution ont attribué à ladite valeur seuil, ladite moyenne de calibration.

10. Capteur selon l'une des revendications 6 à 9, **caractérisé en ce qu'**il comprend au moins un accéléromètre (2) adapté pour fournir des mesures d'accélération selon au moins deux directions.

11. Capteur selon l'une des revendications 6 à 10,

**caractérisé en ce qu'**il comprend des moyens pour fixer le boîtier (3) à un objet mobilier de manière à ce que tout déplacement dudit objet mobilier puisse entraîner la détection d'un mouvement par ledit capteur.

12. Système d'alarme comprenant :

- au moins un capteur (1) de détection de mouvement selon l'une des revendications 6 à 11,
- un dispositif d'émission de signaux d'alarme,
- un module de déclenchement d'alarme adapté pour commander l'émission de signaux d'alarme par au moins le dispositif d'émission de signaux d'alarme si au moins un capteur de détection de mouvement émet un signal représentatif d'une détection de mouvement.


**Claims**

1. Method for processing instantaneous acceleration measurements delivered by an accelerometer (2) in at least one direction with a view to detecting a condition for the triggering of an alarm signal wherein:

- in a first mode of operation, known as the pre-alarm mode, acceleration measurements $\gamma_k$ are taken successively at pre-set time intervals Tk,
- at each instant, at least one value, known as the status value, is calculated according to a function of at least one part of the acceleration measurements $\gamma_k$,
- each status value is compared with a threshold value,

**characterised in that** if said status value is greater than said threshold value, a second mode of operation, known as the alarm mode, different from the first mode of operation, is activated, wherein:

- acceleration measurements $\gamma'_k$ are taken successively at pre-set time intervals T'k, the mean value of the time intervals T'k being smaller than the mean value of the time intervals Tk,
- at each instant, at least one value, known as the trigger value, is calculated according to an odd function of at least one part of said acceleration measurements $\gamma'_k$,
- said trigger value is compared with at least one pre-set value, known as the non-nominal displacement value,
- if said trigger value is greater than said non-nominal displacement value, an alarm trigger condition is verified.

2. Method according to claim 1, **characterised in that**, in the alarm mode, at each instant, said trigger value is calculated according to a polynomial function of at least one part of said acceleration measurements $\gamma'_k$ of odd degree so as to ensure that said trigger values arising from a vibration occurrence are rendered negligible.

3. Method according to one of claims 1 or 2, **characterised in that**:

- the pre-alarm mode sampling periods Tk are selected to be constant in time of value T, said value T not complying with the Shannon Nyquist criterion,
- the alarm mode sampling periods T'k are selected to be constant in time of value T', said value T' being smaller than T and complying with the Shannon Nyquist criterion.

4. Method according to one of claims 1 to 3, **characterised in that**, in the alarm mode, if for a pre-set number of consecutive instants, said calculated trigger values belong to pre-set value intervals, known as drift intervals, a third mode of operation is activated wherein:

- the mean of the samples $\gamma'_k$ of said acceleration measurements of said alert mode is calculated over a given period of time, known as the calibration mean,
- a new threshold value of said first mode of operation is evaluated from this calibration mean,
- the first mode of operation is re-activated.

5. Method according to one of claims 1 to 4, **characterised in that**, in said pre-alarm mode, said status value, a function of at least one part of the acceleration measurements $\gamma_k$, is defined by the absolute value of the sample $\gamma_k$.

6. Movement detection sensor comprising:

- a casing (3),
- at least one accelerometer (2) rigidly secured to the casing (1) and adapted in order to provide instantaneous acceleration measurements in at least one direction,
- means for connecting the sensor to an electric power source,
- means for processing the acceleration measurements delivered by at least one accelerometer (2) including a first module (4) corresponding to a first mode of operation, known as the pre-alarm mode, including:
- means for recording a plurality of samples $\gamma k$ of the instantaneous acceleration measurements taken successively at pre-set time intervals Tk,
- means for calculating, at each instant, at least one value, known as the status value, according to a function of at least one part of the acceleration measurements $\gamma k$,
- means for comparing, at each instant, said status value with a threshold value,

**characterised in that** the processing means include:

- a second module (5) corresponding to a second mode of operation, known as the alarm mode, including:
- means for recording a plurality of samples $\gamma'_k$ of the acceleration measurements taken successively at pre-set time intervals T'k, the mean value of the T'k ones being smaller than the mean value of the Tk ones,
- means for calculating, at each instant, at least one value, known as the trigger value, according to a polynomial function of at least one part of the acceleration measurements $\gamma'_k$ of odd degree,
- means for comparing, at each instant, said trigger value with at least one pre-set value, known as the non-nominal displacement value,
- means for changing the mode of operation, adapted to switch from said pre-alarm mode to said alarm mode if, at a given instant, said status value is greater than said threshold value.

7. Sensor according to claim 6, **characterised in that** it includes means for emitting a signal representing a movement detection if said trigger value is greater than said non-nominal value.

8. Sensor according to one of claims 6 or 7, **characterised in that** the processing means include a third module (6) corresponding to a third mode of operation, known as the calibration mode, including:

- means for calculating, at each instant, the mean of the samples $\gamma'_k$ of said acceleration measurements of said alarm mode, known as the calibration mode, over a given period of time,
- means for assigning this mean to said threshold value.

9. Sensor according to claim 8, **characterised in that** said means for changing the mode of operation are adapted to:

- switch from the alarm mode to the calibration mode if, for a given number of instants, said trigger values belong to pre-set value intervals, known as drift intervals,
- switch from the calibration mode to the pre-alarm mode when the assignment means have assigned said calibration mean to said threshold value.

10. Sensor according to one of claims 6 to 9, **characterised in that** it includes at least one accelerometer (2) adapted to provide acceleration measurements in at least two directions.

11. Sensor according to one of claims 6 to 10, **characterised in that** it includes means for fastening the casing (3) to an item of furniture in such a way that any displacement of said item of furniture is able to bring about the detection of a movement by said sensor.

12. Alarm system including:

- at least one movement detecting sensor (1) according to one of claims 6 to 11,
- an alarm signal emitting device,
- an alarm trigger module adapted to control the emission of alarm signals by at least the alarm signal emitting device if at least one movement detection sensor emits a signal representing a movement detection.

**Patentansprüche**

1. Verfahren zur Verarbeitung von sofortigen, von einem Beschleunigungsmesser (2) gelieferten Beschleunigungsmessungen gemäß wenigstens einer Richtung zwecks Feststellung einer Auslösebedingung eines Alarmsignals, bei dem:

- in einem ersten, als Modus vor dem Alarm bezeichneten Betriebsmodus Beschleunigungsmessungen $\gamma k$ im Anschluss an vorbestimmte Zeitintervalle Tk durchgeführt werden,
- in jedem Moment wenigstens ein als Zustandswert bezeichneter Wert gemäß einer Funktion von wenigstens einem Teil der Beschleunigungsmessungen $\gamma k$ berechnet wird,
- jeder Zustandswert mit einem Schwellenwert verglichen wird,

**dadurch gekennzeichnet, dass**, wenn der genannte Zustandswert höher als der genannte Schwellenwert ist, ein zweiter, als Alarmmodus bezeichneter, vom ersten Betriebsmodus unterschiedlicher Betriebsmodus aktiviert wird, in dem:

- Beschleunigungsmessungen $\gamma k'$ im Anschluss an vorbestimmte Zeitintervalle T'K realisiert werden, wobei der durchschnittliche Wert der Zeitintervalle T'k niedriger ist als der durchschnittliche Wert der Zeitintervalle Tk,
- in jedem Moment wenigstens ein als Auslösewert bezeichneter Wert gemäß einer ungeraden Funktion wenigstens eines Teils der genannten Beschleunigungsmessungen $\gamma k$ berechnet wird,

- der genannte Auslösewert mit wenigstens einem vorbestimmten, als nicht nominaler Verschiebungswert bezeichneten Wert verglichen wird,

- wenn der genannte Auslösewert größer ist als der genannte nicht nominale Verschiebungswert, eine A-larmauslösebedingung überprüft wird.

2. Verfahren gemäß Anspruch 1, **dadurch gekennzeichnet, dass** in dem Alarmmodus in jedem Moment der genannte Auslösewert gemäß einer Polynomfunktion wenigstens eines Teils der genannten Beschleunigungsmessungen $\gamma k$ mit ungeraden Potenzen derart berechnet wird, dass die genannten, aus einem Vibrationsphänomen resultierenden Auslösewerte vernachlässigbar werden.

3. Verfahren gemäß Anspruch 1 oder 2, **dadurch gekennzeichnet, dass**:

- die Perioden der Probennahme Tk des Modus vor dem Alarm als in der Zeit konstant mit dem Wert T gewählt werden, wobei der genannte Wert T nicht das Kriterium nach Shannon Nyquist einhält,

- die Perioden der Probennahme T'k des Alarmmodus als in der Zeit konstant mit dem Wert T' gewählt werden, wobei der genannte Wert T' niedriger ist als T und das Kriterium nach Shannon Nyquist einhält.

4. Verfahren gemäß Anspruch 1 bis 3, **dadurch gekennzeichnet, dass**, wenn im Alarmmodus die genannten berechneten Auslösewerte für eine bestimmte Anzahl von konsekutiven Momenten zu den vorbestimmten Intervallen von Werten gehören, die als Driftintervalle bezeichnet werden, ein dritter Betriebsmodus aktiviert wird, in dem:

- das Mittel der Proben $\gamma k$ der genannten Beschleunigungsmittel des genannten Alarmmodus auf eine bestimmte, als Kalibrierungsmittel bezeichnete Zeitperiode berechnet wird,

- ein neuer Schwellenwert des genannten ersten Betriebsmodus ausgehend von diesem Kalibrierungsmittel eingeschätzt wird,

- der erste Betriebsmodus wieder aktiviert wird.

5. Verfahren gemäß Anspruch 1 bis 4, **dadurch gekennzeichnet, dass** in dem genannten Modus vor dem Alarm der genannte Zustandswert als Funktion von wenigstens einem Teil der Beschleunigungsmessungen $\gamma k$ durch den absoluten Wert der Probe $\gamma k$ definiert wird.

6. Messfühler der Bewegung, der Folgendes umfasst:

- ein Gehäuse (3),

- wenigstens einen Beschleunigungsmesser (2), der fest mit dem Gehäuse (1) verbunden ist und angepasst ist, um sofortige Beschleunigungsmessungen gemäß wenigstens einer Richtung zu liefern,

- Anschlussmittel des Sensors an eine elektrische Energiequelle,

- Verarbeitungsmittel der von wenigstens einem Beschleunigungsmesser (2) ausgegebenen Beschleunigungsmessungen mit einem ersten Modul (4), das einem ersten, als Modus vor dem Alarm bezeichneten Betriebsmodus entspricht und Folgendes umfasst:

- Registrierungsmittel einer Vielzahl von Proben $\gamma k$ der sofortigen Beschleunigungsmessungen, die im Anschluss an vorbestimmte Zeitintervalle TK vorgenommen worden sind,

- Berechnungsmittel in jedem Moment wenigstens eines als Zustandswert bezeichneten Wertes gemäß einer Funktion von wenigstens einem Teil der Beschleunigungsmessungen $\gamma k$,

- Vergleichsmittel in jedem Moment des genannten Zustandswertes mit einem Schwellenwert,

**dadurch gekennzeichnet, dass** die Verarbeitungsmittel Folgendes umfassen:

- ein zweites Modul (5), das einem zweiten, als Alarmmodus bezeichneten Betriebsmodus entspricht und Folgendes umfasst:

- Registrierungsmittel einer Vielzahl von Mustern $\gamma k$ der Beschleunigungsmessungen, die im Anschluss an vorbestimmte Zeitintervalle T'k erfolgt sind, wobei der durchschnittliche Wert der T'k niedriger ist als der durchschnittliche Wert der Tk,

- Berechnungsmittel in jedem Moment wenigstens eines als Auslösewert bezeichneten Wertes gemäß einer Polynomfunktion wenigstens eines Teils der Beschleunigungsmessungen $\gamma k$ mit ungleichen Potenzen,

- Vergleichsmittel in jedem Moment des genannten Auslösewertes mit einem als nicht nominaler Verschiebungswert bezeichneten vorbestimmten Wert,

- Änderungsmittel des Betriebsmodus, die angepasst sind, um von dem genannten Modus vor dem Alarm in den genannten Alarmmodus überzugehen, wenn der genannte Zustandswert zu einem bestimmten Moment höher ist als der genannte Schwellenwert.

7. Sensor gemäß Anspruch 6, **dadurch gekennzeichnet, dass** er Ausgabemittel eines Signals umfasst, dass eine Feststellung einer Bewegung darstellt, wenn der genannte Auslösewert größer ist als der genannte nicht nominale Wert.

8. Sensor gemäß Anspruch 6 oder 7, **dadurch gekennzeichnet, dass** die Verarbeitungsmittel ein drittes Modul (6) umfassen, das einem dritten, als Kalibrierungsmodus bezeichneten Betriebsmodus entsprechen und Folgendes umfasst:

   - Berechnungsmittel in jedem Moment des Mittels der Proben $\gamma'k$ der genannten Beschleunigungsmessungen des genannten Alarmmodus, bezeichnet als Kalibrierungsdurchschnitt, über eine bestimmte Zeitperiode,
   - Zuteilungsmittel dieses Mittels zu dem genannten Schwellenwert.

9. Sensor gemäß Anspruch 8, **dadurch gekennzeichnet, dass** die genannten Änderungsmittel des Betriebsmodus angepasst, um:

   - vom Alarmmodus zum Kalibrierungsmodus überzugehen, wenn die genannten Auslösewerte bei einer bestimmten Anzahl von Momenten zu vorbestimmten Intervallen von als Driftintervalle bezeichneten Intervallen gehören,
   - vom Kalibrierungsmodus in den Modus vor dem Alarm überzugehen, wenn die Zuteilungsmittel dem genannten Schwellenwert das genannte Kalibrierungsmittel zugeteilt haben.

10. Sensor gemäß Anspruch 6 bis 9, **dadurch gekennzeichnet, dass** er wenigstens einen Beschleunigungsmesser (2) umfasst, der angepasst ist, um Beschleunigungsmessungen gemäß wenigstens zwei Richtungen zu liefern.

11. Sensor gemäß Anspruch 6 bis 10, **dadurch gekennzeichnet, dass** er Mittel umfasst, um das Gehäuse (3) an einem mobilen Objekt derart zu befestigen, dass jede Verschiebung des genannten mobilen Objekts die Feststellung einer Bewegung durch den genannten Sensor nach sich ziehen kann.

12. Alarmsystem, das Folgendes umfasst:

   - wenigstens einen Sensor (1) zur Feststellung der Bewegung gemäß Anspruch 6 bis 11,
   - eine Ausgabevorrichtung von Alarmsignalen,
   - ein Alarmauslösemodul, das angepasst ist, um die Ausgabe von Alarmsignalen durch wenigstens die Ausgabevorrichtung von Alarmsignalen zu steuern, wenn wenigstens ein Feststellungssensor der Bewegung ein Signal ausgibt, das eine Feststellung der Bewegung darstellt.

Fig 1

Fig 2

Fig 3a

Fig 3b

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0137236 A

- US 6288395 B1